# EUROPÄISCHE PATENTSCHRIFT

(11) **EP 2 567 127 B1**
(45) Veröffentlichungstag und Bekanntmachung des Hinweises auf die Patenterteilung: **26.03.2014**
(21) Anmeldenummer: 11715708.1
(22) Anmeldetag: 21.04.2011
(51) Int. Cl.: F16H 61/24, F16H 59/10

(54) **TRANSLATORISCHE BETÄTIGUNGSEINRICHTUNG MIT MITTELBARER RASTIERUNG**
TRANSLATORY ACTIVATION DEVICE WITH INDIRECT LATCHING
DISPOSITIF D'ACTIONNEMENT A MOUVEMENT DE TRANSLATION AVEC ENCLIQUETAGE INDIRECT

(30) Priorität: 05.05.2010 DE 102010028624
(43) Veröffentlichungstag der Anmeldung: 13.03.2013
(73) Patentinhaber: ZF Friedrichshafen AG, 88038 Friedrichshafen (DE)
(72) Erfinder: RAKE, Ludger, 49439 Steinfeld (DE); GIEFER, Andreas, 49448 Lemfoerde (DE)
(86) Internationale Anmeldenummer: PCT/EP2011/056404
(87) Internationale Veröffentlichungsnummer: WO 2011/138177

(56) Entgegenhaltungen:
- EP-A2- 1 580 462
- WO-A1-2006/021198
- DE-A1-102004 049 011
- US-A1- 2006 060 019

## Beschreibung

Die Erfindung betrifft eine Betätigungseinrichtung für ein shift-by-wiregesteuertes Gangwechselgetriebe, beispielsweise für einen Getriebeautomaten oder für ein aktuatorisch betätigtes Schaltgetriebe, gemäß dem Oberbegriff des Patentanspruchs 1. Eine solche Betätigungseinrichtung ist beispielsweise aus der Druckschrift EP 1 580 462 A2 bekannt.

Gangwechselgetriebe von Kraftfahrzeugen werden im allgemeinen mittels einer im Griffbereich des Fahrers angeordneten Betätigungseinrichtung geschaltet bzw. gesteuert. Hierzu kommen regelmäßig Betätigungselemente wie Schalthebel, Schaltgriffe oder Wählhebel zum Einsatz, die beispielsweise zwischen den Frontsitzen des Kraftfahrzeugs oder in anderen Bereichen des Cockpits angeordnet werden, zum Beispiel im Bereich der Mittelkonsole.

Die konstruktiven und insbesondere ergonomischen Anforderungen an solche Betätigungseinrichtungen für Gangwechselgetriebe sind zunehmend vielfältig.

Um beispielsweise dem Fahrer aus Gründen der Sicherheit und Ergonomie auch bei elektronisch gesteuerten Getrieben ein realistisches Gefühl der Getriebebetätigung zu vermitteln, wird für gattungsgemäße Betätigungseinrichtungen gefordert, dass bei der Gangwahl klare haptische bzw. taktile Rückmeldungen über den aktuellen Schalt- bzw. Betriebszustand des Getriebes erfolgen. Insbesondere soll es für den Fahrer dabei auch möglich sein, mit einem Blick oder mit einem Griff zum Wählhebel intuitiv den momentanen Schaltzustand des Getriebes zu erfassen.

Es ist somit wünschenswert, dem Fahrer anhand der jeweiligen Momentanposition des Wählhebels eine klare Rückmeldung über den aktuellen Getriebezustand bzw. über die tatsächlich eingelegte Fahrstufe bzw. über den Schalterfolg zu vermitteln.

Bei der elektrischen bzw. shift-by-wire-Betätigung von Gangwechselgetrieben existiert jedoch keine mechanische Kopplung zwischen dem Betätigungshebel in der Fahrgastzelle und dem Kraftfahrzeuggetriebe im Motorraum. Vielmehr erfolgt die Übertragung der Schaltbefehle von der Betätigungseinrichtung zum Kraftfahrzeuggetriebe beim shift-by-wire-Getriebe mittels elektrischer oder elektronischer Signale und anschließender elektrischer bzw. elektrohydraulischer Umsetzung der Schaltbefehle im Getriebe.

Die fehlende mechanische Verbindung zwischen der Getriebeaktuatorik und dem Betätigungshebel führt jedoch dazu, dass der Getriebezustand, etwaige Schaltsperren oder unzulässige Schaltbefehle zunächst nicht mehr direkt und für den Fahrer spürbar auf den Zustand des Betätigungshebels rückwirken können. Im Fall der klassischen, mechanischen Getriebebetätigung bzw. mechanischen Kopplung zwischen Wählhebel und Gangwechselgetriebe - beispielsweise mittels Seilzug oder Gestänge - hingegen stimmt die Wählhebelstellung bereits aufgrund der mechanischen Kopplung grundsätzlich mit der tatsächlichen Getriebestellung überein. Da mechanisch betätigte Getriebe für sich genommen im Allgemeinen multistabil sind (sprich, die Getriebeschaltstellung ist stabil in mehreren bzw. allen Positionen), ist auch der zugehörige Wählhebel multistabil und verbleibt somit ebenso wie das Gangwechselgetriebe stets in der jeweils vom Fahrer eingelegten Stellung bzw. Gangstufe.

Der Fahrer kann demzufolge einerseits von der jeweiligen Wählhebelstellung auf den aktuellen Schaltzustand des Getriebes schließen, bzw. anhand der Wählhebelstellung die im Getriebe jeweils eingelegte Fahrstufe erkennen, und sich andererseits darauf verlassen, dass die Wählhebelstellung nicht vom tatsächlichen Schaltzustand des Getriebes abweicht.

Im Fall der by-wire-betätigten Gangwechselgetriebe kann die fehlende mechanische Verbindung zwischen der Getriebeaktuatorik und dem Wählhebel somit prinzipiell dazu führen, dass die Wählhebelstellung unter bestimmten Rahmenbedingungen nicht mehr mit dem Schaltzustand des Getriebes übereinstimmt.

So weisen moderne Automatgetriebe beispielsweise eine so genannte Auto-P-Funktion auf, die dafür sorgt, dass beim Verlassen des Fahrzeugs ggf. automatisch die Parksperre im Getriebe eingelegt wird, um so ein Wegrollen des unbeaufsichtigten Fahrzeugs zu unterbinden. Die Auto-P-Funktion sorgt mit anderen Worten für das automatische Einlegen der Parksperre im Getriebe unabhängig von der tatsächlich am Wählhebel jeweils angewählten Fahrstufe. Beispielsweise wird die Parksperre durch die Auto-P-Funktion des Getriebes bzw. des Fahrzeugs auch dann selbsttätig eingelegt, wenn der Wählhebel vom Fahrer beispielsweise in der Neutralstellung oder in einer der Fahrstufenstellungen belassen wurde.

In diesem Fall stimmt jedoch die Wählhebelstellung nicht mehr mit dem tatsächlichen Schaltzustand des Getriebes überein. Anhand der Wahrnehmung der Wählhebelstellung müsste der Fahrer somit davon ausgehen, dass sich das Getriebe beispielsweise in der Neutralstellung oder in einer Fahrstufenstellung befindet, während im Getriebe hingegen tatsächlich die Parksperre eingelegt ist.

Im Stand der Technik wird oft versucht, dieser Problematik damit zu begegnen, dass die Wählhebel von shift-by-wire-Gangwechselgetrieben als monostabile Betätigungselemente ausgebildet werden, die nach jeder Betätigung stets wieder in dieselbe Mittelstellung zurückkehren. Die Rückmeldung über den tatsächlichen Schaltzustand des Getriebes bleibt bei einem monostabilen Wählhebel somit einer separaten Ganganzeige überlassen. Hingegen entfällt bei einem monostabilen Wählhebel die Möglichkeit, dem Fahrer anhand der Wählhebelstellung optische bzw. haptische Rückmeldung über den Schaltzustand des Getriebes zu vermitteln.

Ferner ist die Realisierung der mechanischen Schaltlogik und der zur Unterbindung von Fehlschaltungen notwendigen Schaltsperren - wie beispielsweise die sog. Keylock- und Shiftlock-Sperren - bei monostabil ausgebildeten Wählhebeln tendenziell aufwändig und erfordert oft eine komplizierte Aktuatorik zur selektiven Sperrung unzulässiger Schaltbefehle, die zudem nicht unerheblichen Bauraum benötigt und dementsprechende Kosten verursacht. Auch ist mit einer derartigen Aktuatorik häufig unerwünschte Geräuschentwicklung im Bereich der Betätigungseinrichtung bzw. des Wählhebels verbunden.

Die bekannten, monostabil ausgebildeten Betätigungseinrichtungen haben ferner den Nachteil, dass sich der Fahrer dabei an ein neues Bedienkonzept mit dem stets in die Mittelstellung zurückstrebenden Hebel gewöhnen muss, wobei sich dieses Bedienkonzept erheblich von der traditionellen Getriebebetätigung mit stabilen Wählhebelstellungen unterscheidet.

Mit diesem Hintergrund ist es die Aufgabe der vorliegenden Erfindung, eine Betätigungseinrichtung für ein Fahrzeuggetriebe zu schaffen, mit der die genannten, im Stand der Technik vorhandenen Nachteile überwunden werden. Mit der Erfindung sollen insbesondere platzsparende und konstruktiv einfache Betätigungseinrichtungen mit stabilen Wählhebelpositionen geschaffen werden, die eine zuverlässige, leichtgängige Rastierung für das Betätigungselement aufweisen. Ferner soll mit der Erfindung eine zuverlässige optische und taktile Rückmeldung über den tatsächlichen Schaltzustand des Getriebes realisiert werden. Auch eine aktuatorische Beeinflussung der Wählhebelstellung soll mit der Erfindung auf einfache Weise ermöglicht werden.

Diese Aufgabe wird durch eine Betätigungseinrichtung mit den Merkmalen des Patentanspruchs 1 gelöst.

Bevorzugte Ausführungsformen sind Gegenstand der Unteransprüche.

Die Betätigungseinrichtung gemäß der vorliegenden Erfindung umfasst ein Gehäuse, einen translatorisch bewegbaren Betätigungsknauf sowie eine Rastiereinrichtung zur Erzeugung von Rastier- bzw. Rückstellkräften für die Rastierung bzw. Rückstellung des Betätigungsknaufs in eine bestimmte Schaltposition. Dabei umfasst die Rastiereinrichtung einen Rastierpin und eine Rastierkontur, welche somit die beiden Rastierelemente zur Erzeugung der Rastier- bzw. Rückstellkräfte bilden.

Ferner weist die Betätigungseinrichtung ein mit einer Verzahnung am Betätigungsknauf in Eingriff stehendes Rastierzahnrad auf. Dabei ist eines der beiden Rastierelemente der Betätigungseinrichtung mit dem Rastierzahnrad verbunden und bildet auf diese Weise ein schwenkbares bzw. rotierbares Rastierelement. Das andere der beiden Rastierelemente ist hingegen - unmittelbar oder mittelbar - mit dem Sockelgehäuse verbunden, und stellt somit ein feststehendes Rastierelement dar.

Dies bedeutet mit anderen Worten, dass der translatorisch bewegbare Betätigungsknauf der erfindungsgemäßen Betätigungseinrichtung eine Rastierung erhält, welche jedoch die Leichtgängigkeit der Linearführung des Betätigungsknaufs nicht - beispielsweise durch Verkanten - beeinträchtigen kann, da die Funktionen der translatorischen Führung einerseits und der Rastierung andererseits dank der Erfindung voneinander getrennt sind. Die Rastierkräfte wirken somit nicht wie bei herkömmlichen Rastierungen direkt auf die Gleitschiene bzw. Linearführung des Betätigungsknaufs, sondern werden in der separaten Rastiereinrichtung zwischen dem Rastierzahnrad und dem feststehenden Rastierelement erzeugt.

Die Erfindung wird dabei zunächst einmal unabhängig davon verwirklicht, welches der beiden Rastierelemente mit dem Rastierzahnrad verbunden ist und damit mit dem Betätigungsknauf in Eingriff steht, und welches der beiden Rastierelemente sich unmittelbar oder mittelbar am Sockelgehäuse abstützt. So kann beispielsweise der Rastierpin mit dem Rastierzahnrad und damit mit dem Betätigungsknauf verbunden sein, während sich die Rastierkontur unmittelbar oder mittelbar am Gehäuse abstützt. Ebenso kann umgekehrt die Rastierkontur mit dem Rastierzahnrad verbunden sein und damit in Eingriff mit der Position des Betätigungsknaufs stehen, während der Rastierpin unmittelbar oder mittelbar am Gehäuse abgestützt ist.

Ferner ist auch die Art und Weise bzw. konstruktive Ausführung der Verbindung des ersten Rastierelements mit dem Rastierzahnrad zunächst einmal unerheblich für die Verwirklichung der Erfindung. Vorzugsweise ist das erste Rastierelement jedoch einstückig mit dem Rastierzahnrad ausgebildet bzw. verbunden, wodurch sich die Anzahl der Bauteile und damit die Kosten weiter verringern lassen.

Gemäß einer weiteren Ausführungsform der Erfindung ist vorgesehen, dass das Rastierzahnrad als Zahnradsegment ausgebildet ist. Diese Ausführungsform hat den Hintergrund, dass der Verschiebeweg des Betätigungsknaufs üblicherweise nicht so groß ist, dass das Rastierzahnrad eine ganze Umdrehung oder mehr ausführen muss, wenn der Betätigungsknauf entlang seines gesamten Verschiebewegs bewegt wird. Durch Weglassen der nicht benötigten Winkelbereiche des Rastierzahnrads kann somit Material eingespart und zusätzlich Bauraum im Bereich der Rastiereinrichtung gewonnen werden. Prinzipiell kann die Rastierkontur eine weitgehend beliebige, ggf. auch gerade bzw. ebene Form annehmen, solange die Oberfläche der Rastierkontur - entlang des erforderlichen Relativweges zwischen Rastierkontur und Rastierpin - vom Rastierpin bestrichen werden kann. Vorzugsweise ist die Rastierkontur jedoch gekrümmt entlang eines Kreisbogens oder Kreisumfangs angeordnet. Auf diese Weise lassen sich längere Rastierwege und/oder eine größere Anzahl von Rastierpositionen in der Rastiereinrichtung unterbringen, da bei einer kreisbogenförmig oder kreisförmig angeordneten Rastierkontur und bei der erfindungsgemäß grundsätzlich rotierenden Relativbewegung zwischen Rastierkontur und Rastierpin so ein praktisch beliebiger Winkelbereich für den Eingriff zwischen Rastierkontur und Rastierpin zur Verfügung steht.

Auch diese Ausführungsform kann insbesondere unabhängig davon gewählt werden, ob die Rastierkontur mit dem Betätigungsknauf beweglich - also am mit dem Betätigungsknauf in Zahneingriff stehenden Rastierzahnrad - angeordnet ist, oder ob die Rastierkontur das zweite, relativ zum Gehäuse feststehende Rastierelement bildet.

Mit diesem Hintergrund ist die Rastierkontur gemäß einer weiteren bevorzugten Ausführungsform der Erfindung gleichförmig ausgebildet sowie endlos entlang eines Kreisumfangs angeordnet. Gleichzeitig ist dabei das zweite Rastierelement konzentrisch zum ersten Rastierelement, also zum Rastierzahnrad, aktuatorisch rotierend verstellbar

Diese Ausführungsform führt zunächst einmal dazu, dass keine fixe Zuordnung zwischen den einzelnen Rastpositionen der Rastierkontur und den einzelnen Betätigungsstellungen des Betätigungsknaufs mehr besteht, da die Rastierkontur endlos umlaufend und mit sich gleichförmig wiederholendem Rastierverlauf kreisförmig angeordnet ist. Zusätzlich ist bei dieser Ausführungsform das zweite Rastierelement, also das am Gehäuse abgestützte Rastierelement, aktuatorisch rotierend relativ zum Gehäuse aktiv verstellbar. Auch dies gilt zunächst einmal wieder unabhängig davon, ob das zweite, nun aktuatorisch verstellbare Rastierelement die Rastierkontur oder der Rastierpin ist, bzw. unabhängig davon, ob die Rastierkontur am Rastierzahnrad angeordnet ist oder ob die Rastierkontur das zweite Rastierelement bildet.

Diese Ausführungsform bringt es mit anderen Worten zunächst einmal mit sich, dass die translatorische Position des Betätigungsknaufs entlang dessen Bewegungswegs - mittels aktuatorischer Verstellung der Rotationsposition des zweiten Rastierelements - aktiv verändert werden kann. Dabei erfolgt die aktuatorische Verstellung der Position des Betätigungsknaufs, indem die gesamte Rastiereinrichtung aus Rastierkontur und Rastierpin rotatorisch verschwenkt wird. Die Kraftübertragung vom Aktuator auf den Betätigungsknauf erfolgt also über die Rastiereinrichtung in ihrer Gesamtheit, ohne dass dabei eine Relativbewegung zwischen Rastierkontur und Rastierpin stattfindet.

Die Positionierung des Betätigungsknaufs kann also aktuatorisch mit geringstmöglichem Kraftaufwand und mit minimaler Geräuschentwicklung erfolgen, da lediglich die geringen Reibungswiderstände in den rotatorischen Lagerungen der Rastiereinrichtung sowie in der Gleitführung des Betätigungsknaufs überwunden werden müssen, während die jeweilige Relativposition von Rastierkontur und Rastierpin unverändert bestehen bleibt. Dies bedeutet auch, dass ein beispielsweise elektromotorischer Aktuator mit lediglich minimalen Leistungsanforderungen und minimalen Abmessungen für die aktuatorische Verstellung des Betätigungsknaufs ausreicht.

Mit dieser Ausführungsform der Erfindung lässt sich somit eine aktuatorische Nachführung der Position des Betätigungsknaufs - insbesondere bei etwaiger Diskrepanz zwischen Knaufposition und Getriebezustand - auf besonders einfache und zuverlässige Weise verwirklichen. Ein möglicher Anwendungsfall hierfür ist die Auto-P-Funktion von moderne Getriebeautomaten, die beispielsweise beim Verlassen des Fahrzeugs automatisch die Parksperre einlegt unabhängig davon, welche Fahrstufe am Wählhebel bzw. am Betätigungsknauf der Betätigungseinrichtung eingelegt ist.

In einem solchen Fall kann die Position des Betätigungsknaufs dank der vorliegenden Erfindung aktuatorisch sehr einfach und praktisch geräuschlos so nachgeführt werden, dass sich der Betätigungsknauf nach dem automatischen Einlegen der Parksperre im Getriebe ebenfalls in der Parksperrenstellung befindet, womit die gewünschte, korrekte visuelle und haptische Rückmeldung über den Getriebezustand an den Fahrer gegeben wird.

Die Erfindung wird ferner verwirklicht unabhängig davon, wie der aktuatorische Antrieb des zweiten Rastierelements konstruktiv ausgeführt ist, solange sich das zweite Rastierelement mittels des Aktuators rotatorisch in der gewünschten Weise positionieren lässt. Gemäß einer besonders bevorzugten Ausführungsform der Erfindung ist das zweite Rastierelement jedoch mit einem konzentrisch zum Rastierzahnrad rotierbar gelagerten Aktuatorrad verbunden. Dabei steht das Aktuatorrad mit dem motorischen Aktuator in Eingriff. Vorzugsweise ist das zweite Rastierelement dabei zudem einstückig mit dem Aktuatorrad ausgebildet, bzw. unmittelbar an das Aktuatorrad angeformt.

Die Kraftübertragung vom motorischen Aktuator auf das Aktuatorrad und damit auf das zweite Rastierelement kann prinzipiell auf beliebige Weise erfolgen, beispielsweise durch Reibung oder mittels eines Zahnriemens. Vorzugsweise wird das Aktuatorrad vom motorischen Aktuator jedoch mittels Zahnradeingriff angetrieben. Dabei ist der Zahnradeingriff zwischen Aktuator und Aktuatorrad bevorzugt selbsthemmend, insbesondere in Form eines Schneckenradgetriebes ausgebildet.

Das Schneckenradgetriebe hat den Vorteil eines großen Übersetzungsverhältnisses auf minimalen Raum, und ist zudem prinzipiell selbsthemmend, wodurch zusätzliche Maßnahmen zur Blockierung des Aktuatorrads - beispielsweise während der manuellen Betätigung des Schaltknaufs - entfallen können. Bei Stillstand des motorischen Aktuators ist das Aktuatorrad und damit auch das mit dem Aktuatorrad verbundene zweite Rastierelement über das Schneckengetriebe vielmehr grundsätzlich rotatorisch blockiert. Wird somit der Schaltknauf manuell betätigt, so führt dies zu einer Relativbewegung zwischen erstem und zweitem Rastierelement und damit zu der gewünschten Rastwirkung bei der Bewegung des Schaltknaufs entlang seines linearen Bewegungswegs.

Gemäß einer weiteren bevorzugten Ausführungsform der Erfindung erfolgt der Abgriff für die Positionssensorik der Betätigungseinrichtung an der Welle des Rastierzahnrads. Mittels der Positionssensorik ermittelt die Steuerung der Betätigungseinrichtung die aktuelle Istposition des Betätigungsknaufs entlang seines Bewegungswegs. Dank dieser Ausführungsform kann die Ermittlung der Position des Betätigungsknaufs besonders platzsparend und robust mittels eines Winkelsensor aus erfolgen, dessen Abgriff rotatorisch an der Welle des Rastierzahnrads erfolgt.

Wahlweise kann, wie dies auch nach einer weiteren bevorzugten Ausführungsform der Erfindung vorgesehen ist, der Abgriff für die Positionssensorik der Betätigungseinrichtung von der Welle des Rastierzahnrads mittelbar erfolgen, indem auf der Welle des Rastierzahnrads ein Ritzel angeordnet wird, welches seine Rotation auf ein weiteres Ritzel überträgt.

Dabei ist der Winkelsensor zur Ermittlung der Drehposition des Rastierzahnrads - und damit der Position des Betätigungsknaufs - mit dem weiteren Ritzel verbunden. Diese Ausführungsform ist besonders platzsparend, da die Sensorik auf diese Weise weniger axialen Bauraum auf der Welle des Rastierzahnrads erfordert. Zudem wird mit dieser Ausführungsform die Stabilität der Lagerung des Rastierzahnrads verbessert.

Falls das Rastierzahnrad als Zahnradsegment ausgebildet ist, kann bei dieser Ausführungsform die Positionssensorik sogar besonders platzsparend in dem von dem Zahnradsegment nicht bestrichenen Winkelsegment untergebracht werden. Dies führt insgesamt zu einer Betätigungseinrichtung mit minimalen äußeren Abmessungen, die sich äußerst flexibel in das Innenraumpackage eines Fahrzeugs integrieren lässt.

Im Folgenden wird die Erfindung anhand lediglich Ausführungsbeispiele enthaltender Zeichnungen näher erläutert. Dabei zeigt:
- **Fig. 1**: in schematischer isometrischer Ansicht ein Ausführungsbeispiel für eine Betätigungseinrichtung gemäß der vorliegenden Erfindung, mit dem Betätigungsknauf in der P-Position;
- **Fig. 2**: in isometrischer Ansicht die Betätigungseinrichtung gemäß **Fig.1** mit dem Betätigungsknauf in der R-Position;
- **Fig. 3**: in einer **Fig. 2** entsprechenden Ansicht die Betätigungseinrichtung gemäß **Fig. 1** und 2 mit dem Betätigungsknauf in der N-Position;
- **Fig. 4**: in einer **Fig. 2** und **3** entsprechenden Ansicht die Betätigungseinrichtung gemäß **Fig. 1** bis **3** mit dem Betätigungsknauf in der D-Position;
- **Fig. 5**: in einer **Fig. 2** bis **4** entsprechenden Ansicht die Betätigungseinrichtung gemäß **Fig. 1** bis **4** mit Sensorplatine und Zahnradabgriff für den Winkelsensor; und
- **Fig. 6**: in einer **Fig. 2** bis **5** entsprechenden Ansicht die Betätigungseinrichtung gemäß **Fig. 1** bis **5** mit geschlossenem Gehäuse.

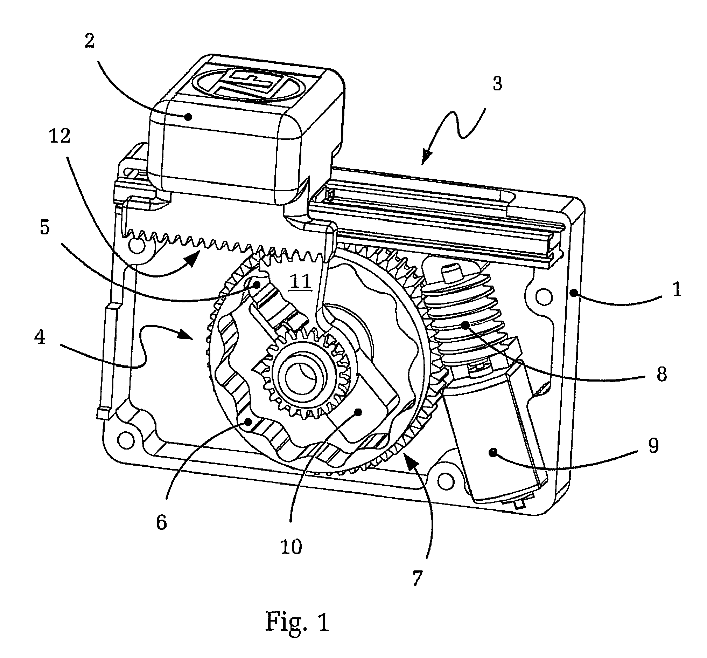

**Fig.1** zeigt in isometrischer Darstellung ein Ausführungsbeispiel für eine Betätigungseinrichtung gemäß der vorliegenden Erfindung, mit geöffneten Gehäuse im Hinblick auf die Erkennbarkeit der Rastiereinrichtung und der Aktuatorik der Betätigungseinrichtung.

Man erkennt außer der zeichnungsbezogen hinteren Gehäusehälfte 1 zunächst einen Betätigungsknauf 2, der mittels einer Gleitführung 3 linear translatorisch im

Gehäuse 1 gelagert ist. Im Anwendungsfall der Steuerung der Schaltstufen eines Fahrzeuggetriebes können somit mittels linearer Bewegung des Betätigungsknaufs 2 die verschiedenen Schaltzustände des Getriebes, insbesondere die Stufen P, R, N, D vom Fahrer ausgewählt werden.

Die aus Gründen der Ergonomie und Haptik erforderliche spürbare Rastierung des Betätigungsknaufs erfolgt dabei erfindungsgemäß nicht direkt in der Gleitführung 3, sondern mittelbar in der Rastiereinrichtung 4. Die Rastiereinrichtung 4 umfasst hierzu einen Rastierpin 5 und eine Rastierkontur 6, wobei der Rastierpin 5 in federbelastetem Eingriff mit der Rastierkontur 6 steht. Die Rastierkontur 6 ist gleichförmig ausgebildet und endlos entlang der Innenseite des Aktuatorzahnrads 7 angeordnet, wobei das Aktuatorzahnrad 7 mittels einer Getriebeschnecke 8 mit einem elektromotorischen Aktuator 9 in Eingriff steht. Das Federgehäuse 10 des Rastierpins 5 ist konzentrisch zum Aktuatorzahnrad 7 gelagert und kann somit koaxial zum Aktuatorzahnrad 7 rotatorisch verschwenkt werden.

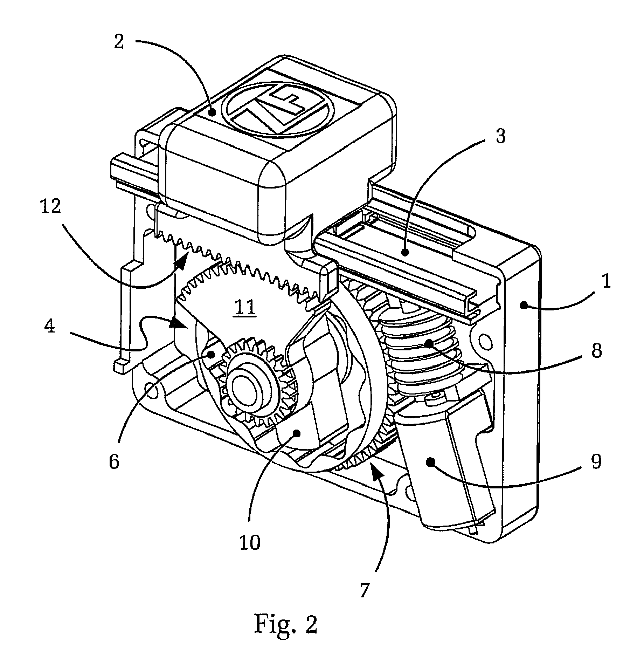

Mit dem Federgehäuse 10 des Rastierpins 5 einstückig verbunden ist das Rastierzahnrad 11, welches mit der Linearverzahnung 12 am Betätigungsknauf 2 in Eingriff steht. Zum einen ist das Rastierzahnrad 11 dabei vorliegend als Zahnradsegment ausgebildet, welches nur den bei der Verschiebebewegung des Betätigungsknaufs 2 tatsächlich anfallenden Rotationswinkel abdeckt, und zum anderen sind in der Darstellung von Fig. 1 Teile des Rastierzahnrads 11 weggebrochen dargestellt, um den hinter dem Rastierzahnrad 11 angeordneten Rastierpin 5 erkennbar zu machen. Die tatsächliche Gestalt des als Zahnradsegment ausgebildeten Rastierzahnrads 11 ist in den **Fig. 2** bis **5** erkennbar.

Bei der normalen Betätigung des Knaufs 2 durch den Fahrer erfolgt somit - über den Zahneingriff der Linearverzahnung 12 mit dem Rastierzahnrad 11 - eine rotatorische Verschwenkung des Rastierzahnrads 11 und damit des Federgehäuses 10 sowie des Rastierpins 5. Hierdurch tastet der Rastierpin 5 die Rastierkontur 6 auf der Innenseite des - mittels des Schneckengetriebes 8 rotatorisch blockierten - Aktuatorzahnrads 7 ab und erzeugt so die gewünschten, vom Fahrer am Betätigungsknauf 2 spürbaren Rastier- bzw. Rückstellkräfte.

Der Ablauf der Schaltbetätigung des Knaufs 2 ist schematisch in den Fig. 2 bis 4 dargestellt. In Fig. 2 wurde der Betätigungsknauf 2 aus der Position P gemäß Fig. 1 in die Position R bewegt. Entsprechend wurde das Rastierzahnrad 11, ferner das mit dem Rastierzahnrad 11 einstückig verbundene Federgehäuse 10 und der darin angeordnete (hier nicht sichtbare, da hinter dem Rastierzahnrad 11 verborgene) Rastierpin 5 (vgl. **Fig. 1**) rotatorisch verschwenkt, wodurch der Rastierpin 5 aus seiner Rastposition in der Rastierkontur 6 gemäß **Fig. 1** in die benachbarte Rastposition der Rastierkontur 6 gemäß Fig. 2 bewegt wurde. Damit rastet auch der Betätigungsknauf 2 wieder spürbar - der Getriebeschaltstellung R entsprechend - entlang der Gleitführung 3 ein.

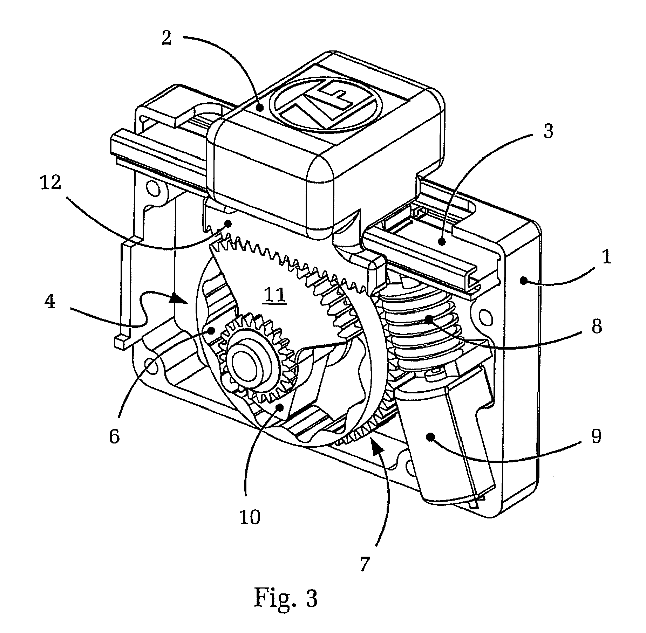

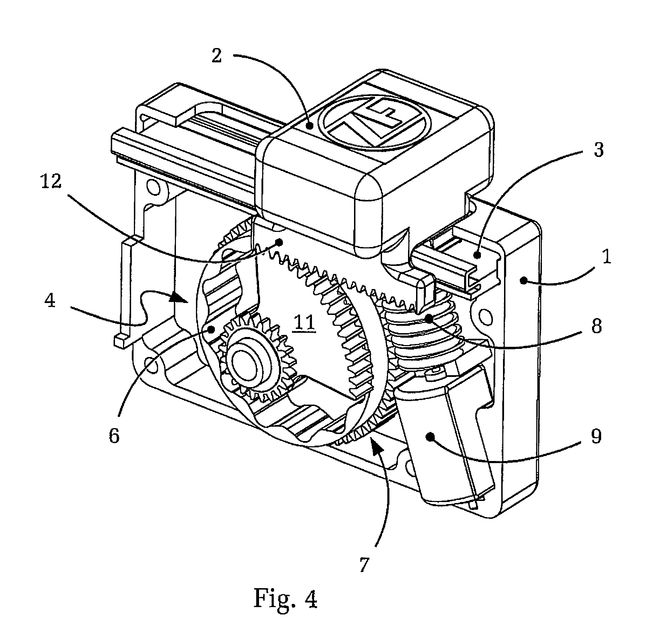

In ähnlicher Weise erfolgt die Bewegung des Betätigungsknaufs 2 in die Position N gemäß **Fig. 3** und schließlich in die Position D gemäß **Fig. 4****.** Dabei wird das Rastierzahnrad 11 und der damit verbundene Rastierpin 5 jeweils um eine weitere Rastposition in der Rastierkontur 6 rotatorisch verschwenkt. Die jeweiligen Rastierkräfte werden über das Rastierzahnrad 11 und die Linearverzahnung 12 auf den Betätigungsknauf 2 übertragen.

Bei den beschriebenen Betätigungen des Knaufs 2 gemäß **Fig. 1** bis **4** bleibt der motorische Aktuator 9 stets ausgeschaltet. Damit ist auch das Aktuatorzahnrad 7 aufgrund seines Eingriffs in die Getriebeschnecke 8 des Aktuators 9 rotatorisch blockiert, ebenso die auf der Innenseite des Aktuatorzahnrads 7 angeordnete Rastierkontur 6. Bis hierher wirkt die Rastiereinrichtung 4 aus Rastierpin 5 und Rastierkontur 6 (vgl. **Fig. 1**) somit wie eine normale, passive Rastiereinrichtung.

Sobald jedoch z.B. die Auto-P-Funktion des Fahrzeuggetriebes in Aktion tritt, beispielsweise wenn der Fahrer das Fahrzeug abstellt und verlässt, ohne zuvor die Parksperre einzulegen, kann die Position des Betätigungsknaufs 2 der im Kraftfahrzeuggetriebe automatisch eingelegten Parksperre - mittels des Aktuators 9 - nachgeführt werden. Bei der Rückkehr zum Fahrzeug findet der Fahrer den Betätigungsknauf 2 somit in der mit dem Getriebezustand wieder übereinstimmenden Position P vor, wodurch für den Fahrer somit keine Unklarheiten über den Schaltzustand des Getriebes entstehen können.

Die automatische Nachführung des Betätigungsknaufs 2 in die mit dem Getriebezustand übereinstimmende Knaufposition erfolgt bei der in den Figuren dargestellten Ausführungsform mittels des motorischen Aktuators 9. Der Aktuator 9 verdreht hierzu mittels der Getriebeschnecke 8 das Aktuatorzahnrad 7 und damit auch die auf der Innenseite des Aktuatorzahnrads 7 angeordnete Rastierkontur 6. Dieser Rotation der Rastierkontur 6 folgt auch der Rastierpin 5 (vgl. **Fig. 1**), wodurch sich die Rotation von Aktuatorzahnrad 7, Rastierkontur 6 und Rastierpin 5 auch auf das mit dem Rastierpin 5 verbundene Rastierzahnrad 11 überträgt. Die Rotation des Rastierzahnrads 11 wiederum führt über den Zahneingriff zwischen Rastierzahnrad 11 und Linearverzahnung 12 zu der gewünschten lineare Verschiebung des Betätigungsknaufs 2 in die mit dem Getriebezustand übereinstimmende Schaltposition.

Da bei einer derartigen aktuatorischen Rückführung des Betätigungsknaufs 2 somit die Rastierung zwischen Rastierpin 5 und Rastierkontur 6 erhalten bleibt und nicht überwunden werden muss, genügt hierfür ein minimal dimensionierter Aktuator 9. Aus den gleichen Gründen entstehen bei der aktuatorischen Rückführung des Betätigungsknaufs 2 - beispielsweise in die Position P - praktisch keinerlei störende Geräusche.

Da bei der dargestellten Ausführungsform der Erfindung die Stellkraft - zur aktuatorischen Rückführung bzw. Bewegung des Betätigungsknaufs 2 - vom Aktuator 9 über die mit dem Aktuatorzahnrad 7 mitrotierende Rastierkontur 6 und über den ebenfalls mitrotierenden Rastierpin 5 übertragen wird, wobei keine Relativbewegung zwischen Rastierkontur 6 und Rastierpin 5 erfolgt, weist die Betätigungseinrichtung in dieser Form auch bereits einen Überlastschutz für den Missbrauchsfall auf.

Würde beispielsweise der Betätigungsknauf 2 während seiner aktuatorischen Bewegung bzw. Rückführung vom Fahrer festgehalten (oder wäre der Betätigungsknauf 2 beispielsweise durch einen Gegenstand blockiert) so würde in diesem Fall die aus Rastierpin 5 und Rastierkontur 6 bestehende Rastiereinrichtung die auf den Betätigungsknauf 2 übertragene Kraft begrenzen, indem die Rastierkontur 6 unter dem in diesem Fall blockierten Rastierpin 5 hindurchgleitet. Eine Überlastung einzelner Bauteile der Betätigungseinrichtung ist somit bereits konstruktiv ausgeschlossen, weshalb zusätzliche Maßnahmen zum Überlastschutz insbesondere des Aktuators 9, wie sie im Stand der Technik (beispielsweise in Form einer Thermosicherung) notwendig sind, entfallen können.

Die aktuatorisch veränderbare Position des Betätigungsknaufs 2 kann zudem auch zur Realisierung weiterer Funktionen der Betätigungseinrichtung herangezogen werden. Insbesondere können damit auch die sog. Shiftlock- und Keylock-Funktionen eines Automatikgetriebes bereitgestellt werden, bei denen das Getriebe in einem bestimmten Schaltzustand bleibt, bis vom Fahrer bestimmte Betätigungsbedingungen erfüllt werden, beispielsweise Starten des Motors bzw. Treten des Bremspedals vor dem Einlegen einer Getriebefahrstufe. Erfüllt der Fahrer diese - aus Sicherheitsgründen erforderlichen - Betätigungsbedingungen nicht, so kann der Betätigungsknauf 2 aus der momentan also unzulässigen Schaltposition aktuatorisch in diejenige Position zurückgeführt werden, welche dem aktuellen Getriebezustand entspricht. Auf diese Weise lässt sich dem Fahrer die aktuell unzulässige Getriebebetätigung deutlich signalisieren.

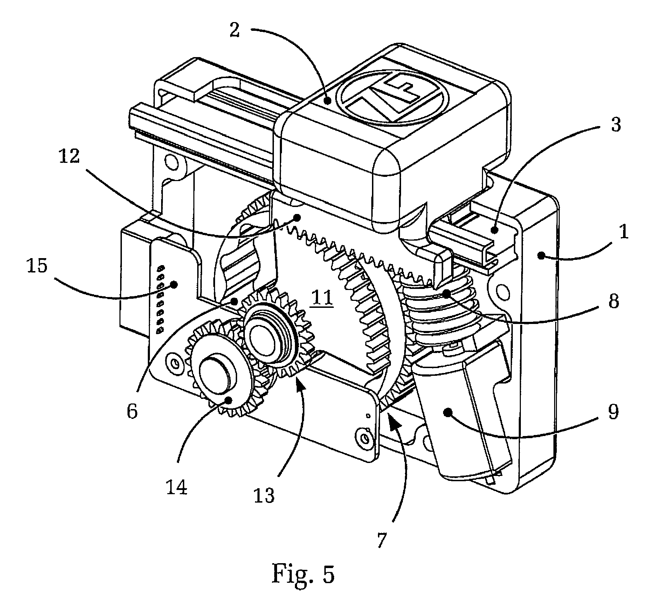

Die zur Ermittlung der jeweils aktuellen Position des Betätigungsknaufs 2 erforderliche Sensorik ist in Fig. 5 schematisch dargestellt. Man erkennt ein Ritzelpaar 13, 14 und eine Sensorplatine 15. Über das Ritzelpaar 13, 14 wird die aktuelle Rotationswinkelstellung des Rastierzahnrads 11 (und damit die aktuelle Linearposition des Betätigungsknaufs 2) abgegriffen und auf einen (nicht dargestellten) Winkelsensor auf der Sensorplatine 15 übertragen. Der Winkelsensor kann dabei insbesondere auf der zeichnungsbezogenen Rückseite der Sensorplatine 15 - in dem von dem Segment des Rastierzahnrads 11 nicht bestrichenen Raumbereich - angeordnet sein, wodurch sich die dargestellte, besonders kompakte und flache Ausführung der Betätigungseinrichtung ergibt.

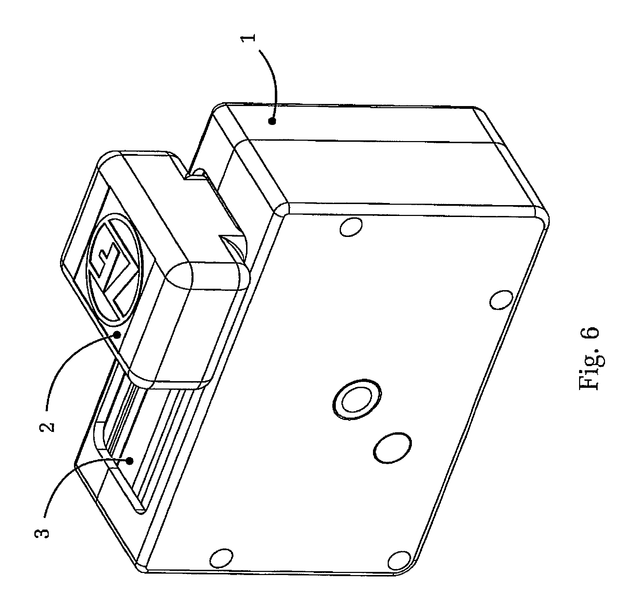

Letzteres geht insbesondere aus Fig. 6 hervor. Man erkennt, dass die gesamte Betätigungseinrichtung einschließlich der enthaltenen Rastiereinrichtung und Aktuatorik lediglich minimalen Bauraum einnimmt, insbesondere äußerst flach ist. Die erfindungsgemäße Betätigungseinrichtung kann somit mit großer Flexibilität an der jeweils gewünschten Position im Fahrzeug untergebracht werden. Aufgrund der minimalen Geräuschentwicklung bei der aktuatorischen Bewegung des Betätigungsknaufs 2 kann zudem auf geräuschdämmende Maßnahmen weitgehend verzichtet werden.

Im Ergebnis wird somit deutlich, dass mit der Erfindung eine insgesamt besonders platzsparende, geräuscharme und konstruktiv einfach aufgebaute Betätigungseinrichtung für ein shift-by-wire-betätigtes Gangwechselgetriebe geschaffen wird. Dabei wird aufgrund der indirekt auf den Betätigungsknauf wirkenden, separaten Rastiereinrichtung Schwergängigkeit oder Verkanten des Betätigungsknaufs in seiner Linearführung vermieden. Zugleich lässt sich mittels der Rastiereinrichtung eine zuverlässige taktile Rückmeldung über die eingelegte Getriebeposition realisieren. Schließlich ermöglicht die Erfindung auch, dass die Wählhebelstellung bei shift-by-wire-gesteuerten Fahrzeuggetrieben optisch wie auch taktil stets den tatsächlichen Schaltzustand des Getriebes widerspiegelt, und bietet damit entscheidende Vorteile insbesondere gegenüber gebräuchlichen monostabilen Betätigungseinrichtungen für shift-by-wire-gesteuerte Fahrzeuggetriebe.

Die Erfindung leistet somit einen zentralen Beitrag zur Verbesserung der Ergonomie, des Bedienkomforts sowie der Bauraum- und Kosteneffektivität insbesondere bei den aktuellen Anwendungen im Bereich der elektronisch gesteuerten Getriebebetätigung von Kraftfahrzeugen.

### Bezugszeichenliste

- 1: Gehäuse
- 2: Betätigungsknauf
- 3: Gleitführung
- 4: Rastiereinrichtung
- 5: Rastierpin
- 6: Rastierkontur
- 7: Aktuatorzahnrad
- 8: Schneckengetriebe
- 9: Aktuator
- 10: Federgehäuse
- 11: Rastierzahnrad
- 12: Linearverzahnung
- 13, 14: Ritzel
- 15: Sensorplatine

## Patentansprüche

1. Betätigungseinrichtung zur Auswahl von Schaltstufen eines shift-by-wire-Gangwechselgetriebes, die Betätigungseinrichtung umfassend ein Sockelgehäuse (1), einen Betätigungsknauf (2), eine Rastiereinrichtung (4) mit Rastierpin (5) und Rastierkontur (6) als Rastierelemente zur Erzeugung von Rastier- bzw. Rückstellkräften, ein mit einer Verzahnung (12) am Betätigungsknauf (2) in Eingriff stehendes Rastierzahnrad (11), wobei ein erstes der beiden Rastierelemente (5, 6) mit dem Rastierzahnrad (11) verbunden ist und ein rotierbares Rastierelement bildet, während das zweite Rastierelement unmittelbar oder mittelbar mit dem Sockelgehäuse (1) verbunden ist und ein feststehendes Rastierelement bildet,
**gekennzeichnet durch**
einen translatorisch bewegbaren Betätigungsknauf (2).

2. Betätigungseinrichtung nach Anspruch 1,
**dadurch gekennzeichnet,**
**dass** das erste Rastierelement (5) einstückig am Rastierzahnrad (11) angeordnet ist.

3. Betätigungseinrichtung nach Anspruch 1 oder 2,
**dadurch gekennzeichnet,**
**dass** das Rastierzahnrad (11) als Zahnradsegment ausgebildet ist.

4. Betätigungseinrichtung nach einem der Ansprüche 1 bis 3,
**dadurch gekennzeichnet**
**dass** die Rastierkontur (6) entlang eines Kreisbogens oder Kreisumfangs angeordnet ist.

5. Betätigungseinrichtung nach einem der Ansprüche 1 bis 4,
**dadurch gekennzeichnet**
**dass** die Rastierkontur (6) gleichförmig ausgebildet und endlos entlang eines Kreisumfangs angeordnet ist, wobei das zweite Rastierelement (6) konzentrisch zum Rastierzahnrad (11) aktuatorisch rotierend verstellbar ist.

6. Betätigungseinrichtung nach einem der Ansprüche 1 bis 5,
**dadurch gekennzeichnet,**
**dass** das zweite Rastierelement (6) mit einem konzentrisch zum Rastierzahnrad (11) rotierbaren Aktuatorrad (7) verbunden ist, welches mit einem motorischen Aktuator (9) in Eingriff steht.

7. Betätigungseinrichtung nach Anspruch 6,
**dadurch gekennzeichnet,**
**dass** das zweite Rastierelement (6) einstückig mit dem Aktuatorrad (7) ausgebildet ist.

8. Betätigungseinrichtung nach Anspruch 6 oder 7,
**dadurch gekennzeichnet,**
**dass** das das Aktuatorrad (7) mittels Zahnradeingriff mit dem Aktuator (9) in Verbindung steht.

9. Betätigungseinrichtung nach Anspruch 8,
**dadurch gekennzeichnet,**
**dass** der Zahnradeingriff selbsthemmend ausgebildet ist.

10. Betätigungseinrichtung nach Anspruch 8 oder 9,
**dadurch gekennzeichnet,**
**dass** der Zahnradeingriff als Schneckenradgetriebe (8) ausgebildet ist.

11. Betätigungseinrichtung nach einem der Ansprüche 1 bis 10,
**dadurch gekennzeichnet,**
**dass** der Abgriff für eine Positionssensorik (15) der Betätigungseinrichtung an der Welle des Rastierzahnrads (11) erfolgt.

12. Betätigungseinrichtung nach Anspruch 11,
**dadurch gekennzeichnet,**
**dass** der Abgriff für die Positionssensorik (15) der Betätigungseinrichtung von der Welle des Rastierzahnrads (11) mittelbar über ein Ritzelpaar (13, 14) erfolgt.

## Claims

1. Activation device for the selection of shift steps of a shift-by-wire gear-change transmission, the activation device comprising a base housing (1), an activation knob (2), a latching device (4) with a latching pin (5) and latching contour (6) as latching elements for the generation of latching or resetting forces, and a latching gearwheel (11) which is in engagement with a toothing (12) on the activation knob (2), the first of the two latching elements (5, 6) being connected to the latching gearwheel (11) and forming a rotatable latching element, while the second latching element is connected directly or indirectly to the base housing (1) and forms a stationary latching element, **characterized by** a translationally movable activation knob (2).

2. Activation device according to Claim 1, **characterized in that** the first latching element (5) is arranged in one piece on the latching gearwheel (11).

3. Activation device according to Claim 1 or 2, **characterized in that** the latching gearwheel (11) is formed as a gearwheel segment.

4. Activation device according to one of Claims 1 to 3, **characterized in that** the latching contour (6) is arranged along an arc of a circle or circumference of a circle.

5. Activation device according to one of Claims 1 to 4, **characterized in that** the latching contour (6) is designed uniformly and is arranged endlessly along a circumference of a circle, the second latching element (6) being adjustable concentrically to the latching gearwheel (11) by rotary actuation.

6. Activation device according to one of Claims 1 to 5, **characterized in that** the second latching element (6) is connected to an actuator wheel (7) which is rotatable concentrically to the latching gearwheel (11) and which is in engagement with a motor actuator (9).

7. Activation device according to Claim 6, **characterized in that** the second latching element (6) is formed in one piece with the actuator wheel (7).

8. Activation device according to Claim 6 or 7, **characterized in that** the actuator wheel (7) is connected to the actuator (9) by gearwheel meshing.

9. Activation device according to Claim 8, **characterized in that** the gearwheel meshing is designed to be self-locking.

10. Activation device according to Claim 8 or 9, **characterized in that** the gearwheel meshing is designed as a worm gear mechanism (8).

11. Activation device according to one of Claims 1 to 10, **characterized in that** the pick-off for the position sensing (15) of the activation device takes place on the shaft of the latching gearwheel (11).

12. Activation device according to Claim 11, **characterized in that** the pick-off for the position sensing (15) of the activation device takes place indirectly from the shaft of the latching gearwheel (11) via a pair of pinions (13, 14).

## Revendications

1. Dispositif d'actionnement pour la sélection d'étages de changement de vitesse d'une boîte de vitesse manuelle de type à commande électrique, le dispositif d'actionnement comprenant un boîtier d'embase (1), un bouton d'actionnement (2), un dispositif d'encliquetage (4) avec une goupille d'encliquetage (5) et un contour d'encliquetage (6) en tant qu'éléments d'encliquetage pour produire des forces d'encliquetage ou de rappel, une roue dentée d'encliquetage (11) en prise avec une denture (12) sur le bouton d'actionnement (2), un premier des deux éléments d'encliquetage (5, 6) étant connecté à la roue dentée d'encliquetage (11) et formant un élément d'encliquetage rotatif, tandis que le deuxième élément d'encliquetage est connecté directement ou indirectement au boîtier d'embase (1) et forme un élément d'encliquetage fixe,
**caractérisé par**
un bouton d'actionnement (2) mobile en translation.

2. Dispositif d'actionnement selon la revendication 1,
**caractérisé en ce que**
le premier élément d'encliquetage (5) est réalisé d'une seule pièce sur la roue dentée d'encliquetage (11).

3. Dispositif d'actionnement selon la revendication 1 ou 2,
**caractérisé en ce que**
la roue dentée d'encliquetage (11) est réalisée sous forme de segment de roue dentée.

4. Dispositif d'actionnement selon l'une quelconque des revendications 1 à 3,
**caractérisé en ce que**
le contour d'encliquetage (6) est disposé le long d'un arc de cercle ou d'une circonférence de cercle.

5. Dispositif d'actionnement selon l'une quelconque des revendications 1 à 4,
**caractérisé en ce que**
le contour d'encliquetage (6) est réalisé de manière uniforme et sans fin le long d'une circonférence de cercle, le deuxième élément d'encliquetage (6) pouvant être réglé en rotation par un actionneur concentriquement à la roue dentée d'encliquetage (11).

6. Dispositif d'actionnement selon l'une quelconque des revendications 1 à 5,
**caractérisé en ce que**
le deuxième élément d'encliquetage (6) est connecté à une roue d'actionneur (7) pouvant être entraînée en rotation concentriquement à la roue dentée d'encliquetage (11), laquelle roue d'actionneur est en prise avec un actionneur à moteur (9).

7. Dispositif d'actionnement selon la revendication 6,
**caractérisé en ce que**
le deuxième élément d'encliquetage (6) est réalisé d'une seule pièce avec la roue d'actionneur (7).

8. Dispositif d'actionnement selon la revendication 6 ou 7,
**caractérisé en ce que**
la roue d'actionneur (7) est en liaison avec l'actionneur (9) par le biais d'un engagement à roue dentée.

9. Dispositif d'actionnement selon la revendication 8,
**caractérisé en ce que**
l'engagement à roue dentée est réalisé de manière autobloquante.

10. Dispositif d'actionnement selon la revendication 8 ou 9,
**caractérisé en ce que**
l'engagement à roue dentée est réalisé sous forme d'engrenage à vis sans fin (8).

11. Dispositif d'actionnement selon l'une quelconque des revendications 1 à 10,
**caractérisé en ce que**
le captage pour un système de capteur de position (15) du dispositif d'actionnement a lieu au niveau de l'arbre de la roue dentée d'encliquetage (11).

12. Dispositif d'actionnement selon la revendication 11,
**caractérisé en ce que**
le captage pour le système de capteur de position (15) du dispositif d'actionnement a lieu par l'arbre de la roue dentée d'encliquetage (11) de manière indirecte par le biais d'une paire de pignons (13, 14).
